# EUROPÄISCHE PATENTANMELDUNG

(11) **EP 1 580 538 A2**
(43) Veröffentlichungstag der Anmeldung: **28.09.2005**
(21) Anmeldenummer: 05006180.3
(22) Anmeldetag: 22.03.2005
(51) Int. Cl.: G01F 3/08, G01N 1/14

(54) **Probenehmer zur Entnahme einer definierten Probemenge eines fluiden Mediums aus einer Probe-Entnahmestelle**

(30) Priorität: 25.03.2004 DE 102004015083
(71) Anmelder: ENDRESS + HAUSER WETZER GmbH + Co. KG, D-87484 Nesselwang (DE)
(72) Erfinder: Zeller, Robert, 86983 Lechbruck (DE); Dietrich, Peter, 87484 Nesselwang (DE)
(74) Vertreter: Andres, Angelika Maria

(57) **Zusammenfassung**

Die Erfindung bezieht sich auf einen Probenehmer (1) zur Entnahme einer definierten Probemenge eines fluiden Mediums (3) aus einer Probe-Entnahmestelle (2) mit einer Rohrleitung (4), die mit dem fluiden Medium (3) in der Probe-Entnahmestelle (2) in Kontakt bringbar ist und über die das fluide Medium (3) in zumindest einen Aufnahmebehälter (5) beförderbar ist, mit einer Pumpe, die das Medium (3) über die Rohrleitung (4) aus der Probe-Entnahmestelle (2) in den Aufnahmebehälter (5) befördert, und mit einer Ablaufsteuerung (9), die die Pumpe so ansteuert, dass sie die definierte Probenmenge in den Aufnahmebehälter (5) abfüllt. Erfindungsgemäß handelt es sich bei der Pumpe um eine Drehkolbenpumpe (7).

## Beschreibung

Die Erfindung bezieht sich auf einen Probenehmer zur Entnahme einer definierten Probemenge eines fluiden Mediums aus einer Probe-Entnahmestelle mittels einer Rohrleitung, die mit dem fluiden Medium in der Probe-Entnahmestelle in Kontakt bringbar ist und über die das fluide Medium in zumindest einen Aufnahmebehälter beförderbar ist, mit einer Pumpe, die das Medium über die Rohrleitung aus der Probe-Entnahmestelle in den Aufnahmebehälter befördert, und mit einer Steuereinheit, die die Pumpe so ansteuert, dass sie die definierte Probemenge in den Aufnahmebehälter abfüllt.

Entsprechende Probenehmer sind bereits aus dem Stand der Technik bekannt. Von der Anmelderin wird unter der Bezeichnung ASP-Port 2000 bzw. ASP-Station 2000 ein transportabler bzw. ein stationärer Probenehmer zur definierten Entnahme von Proben eines fluiden Mediums aus einer Probe-Entnahmestelle angeboten und vertrieben. Bei den bekannten Probenehmern werden Vakuum-Membranpumpen eingesetzt; die Dosierung der Proben in die Probe-Aufnahmebehälter erfolgt mittels mikroprozessor-gesteuerter Pneumatik-Komponenten.

Bei den bekannten Probenehmern kommt das Vakuumprinzip zum Einsatz. Die Ablaufsteuerung bei einer Probenahme arbeitet folgendermaßen: In einem ersten Schritt wird die Dosiereinheit pneumatisch abgesperrt, indem ein Quetschventil geschlossen und die flexible Rohrleitung, hier der Ablaufschlauch, abgesperrt wird. Die Membranpumpe bläst über den Dosierbehälter die Ansaugleitung frei. Anschließend wird eine frische Probe angesaugt, bis ein definierter Füllstand in dem Dosierbehälter erreicht ist. In einem dritten Schritt wird ein eingestelltes, definiertes Probevolumen dosiert; die überschüssige Probemenge fließt zur Probe-Entnahmestelle zurück.

Zuletzt wird das Quetschventil wieder geöffnet, und die dosierte Probemenge wird in den Aufnahmebehälter abgelassen.

Bei dieser bekannten Lösung ergeben sich in bestimmten Fällen dadurch Probleme, dass es beim Sammeln der Probe in dem Dosierbehälter zu einer Sedimentation der Probe kommen kann, was u.U. zu einer Verfälschung der Probe führen kann.

Ein weiterer aus dem Stand der Technik bekannt gewordener Probenehmer wird von der Anmelderin unter der Bezeichnung Liqui-Port 2000 angeboten und vertrieben. Der Liqui-Port 2000 ist ein tragbarer Probenehmer zur vollautomatischen Entnahme und Verteilung von Proben eines fluiden Mediums. Das Ansaugen und Dosieren der Prvbenflüssigkeit erfolgt mit einer Schlauchpumpe. Hierbei wird ein flexibler Pumpenschlauch durch eingreifende Rollen periodisch verformt, wodurch eine Pumpwirkung erzeugt wird. Zur Detektion des in der Rohrleitung geförderten Mediums wird ein Drucksensor eingesetzt. Die Probenahme beim Liqui-Port 2000 kann aufgrund einer integrierten TimerFunktion zu definierten Zeitpunkten stattfinden. Weiterhin ist es möglich, die Probenahme mengen- oder durchflussgesteuert durchzuführen. Die automatische Probenverteilung erfolgt mittels eines automatisch drehbaren Verteilerrohres, das sukzessive bezüglich der einzelnen in einem Karussell angeordneten Aufnahmebehälter positioniert wird.

Der Erfindung liegt die Aufgabe zugrunde, einen konstruktiv einfach aufgebauten Probenehmer vorzuschlagen.

Die Aufgabe wird dadurch gelöst, dass es sich bei der Pumpe um eine Drehkolbenpumpe handelt. Drehkolbenpumpen sind allgemein bekannt und werden u.a. von der Firma Börger in unterschiedlichen Ausgestaltungen für unterschiedliche Anwendungen angeboten und vertrieben. Drehkolbenpumpen sind standfest und wenig wartungsintensiv.

Gemäß einer bevorzugten Weiterbildung des erfindungsgemäßen Probenehmers ist dieser als mobile Einheit oder als stationäre Einheit ausgebildet.

Eine bevorzugte Ausgestaltung des erfindungsgemäßen Probenehmers sieht einen Sensor vor, mit dem die durch die Rohrleitung geförderte und/oder in den Aufnahmebehälter abgefüllte Probemenge bestimmt wird. Insbesondere handelt es sich bei dem Sensor um einen Winkelgeber bzw. um einen Drehgeber, der die Winkeldrehung und/oder die Drehbewegung einer Drehachse der Drehkolbenpumpe erfasst; die Ablaufsteuerung steuert anhand der von dem Winkelgeber bzw. von dem Drehgeber gelieferten Messwerte die Drehkolbenpumpe derart, dass die definierte Probemenge durch die Rohrleitung in einen der Aufnahmebehälter gefördert wird. Mit der Drehkolbenpumpe lässt sich daher eine durchfluss-proportionale Probenahme in einfacher Art und Weise realisieren, da die Rotation der Kolben der Pumpe in einem definierten Zusammenhang mit dem geförderten Probevolumen steht. Im Prinzip ist es daher ausreichend, die Rotation der Kolben zu erfassen und geeignet in bekannter Weise auszuwerten. Der Aufbau des erfindungsgemäßen Probenehmers ist insofern sehr einfach, da er lediglich aus der Drehkolbenpumpe und einem Drehgeber besteht, der die die Umdrehungen der Kolben erfasst.

Weiterhin schlägt eine vorteilhafte Weiterbildung des erfindungsgemäßen Probenehmers vor, dass es sich bei dem Sensor um ein Messgerät zur Bestimmung des Durchflusses durch die Rohrleitung handelt. Insbesondere handelt es sich bei dem Durchflussmessgerät um einen Drucksensor. Ein entsprechender Drucksensor wird beispielsweise bei dem transportablen Probenehmer Liqui-Port 2000 eingesetzt, der - wie bereits an vorhergehender Stelle erwähnt - von der Anmelderin angeboten und vertrieben wird. Es versteht sich von selbst, dass im Zusammenhang mit dem erfindungsgemäßen Probenehmer auch jede andere bekannte Art eines Durchflußmessgeräts einsetzbar ist.

Alternativ oder kumulativ kann es sich bei dem Sensor im einfachsten Fall um einen Detektor handeln, der erkennt, ob durch die Rohrleitung ein Medium fließt oder nicht.

Um eine automatische Probenahme zu ermöglichen, wird gemäß einer Weiterbildung der erfindungsgemäßen Vorrichtung vorgeschlagen, eine Timerfunktion vorzusehen, die die Probenahme zu vorgegebenen Zeitpunkten startet.

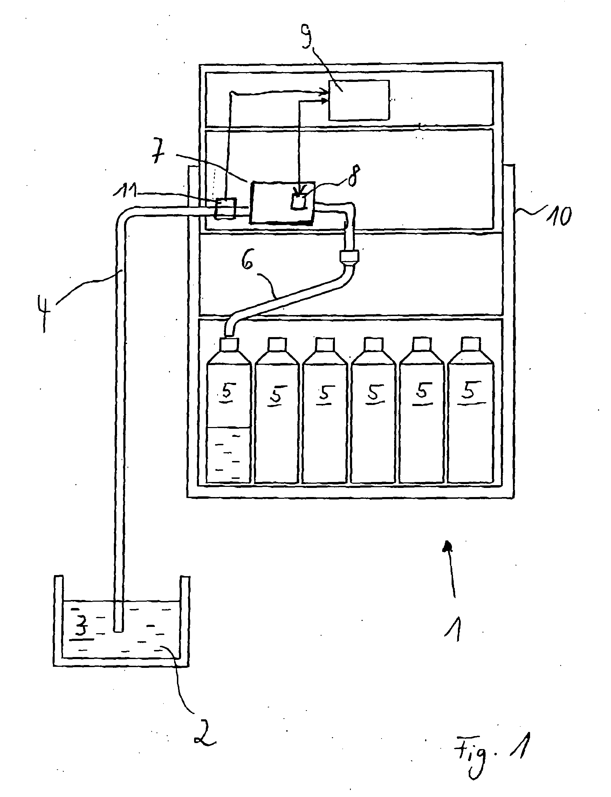

Die Erfindung wird anhand von Fig. 1 näher erläutert. Fig. 1 zeigt eine schematische Darstellung einer Ausgestaltung des erfindungsgemäßen Probenehmers 1. Der Probenehmer 1 dient zur Entnahme von definierten Probemengen eines fluiden Mediums 3 aus der Probe-Entnahmestelle 2; die angesaugte Probe wird über das Verteilersystem 6 sukzessive in die vorgesehenen Aufnahmebehälter 5 abgefüllt. Bei Bedarf ist in dem Probenehmer 1 ein Kühlsystem vorgesehen, das die aus der Probe-Entnahmestelle entnommenen Proben auf eine gewünschten Temperatur abkühlt. Entsprechende Kühlsysteme sind hinlänglich bekannt und werden beispielsweise von der Anmelderin in Verbindung mit den zuvor genannten Typen von Probenehmern angeboten und vertrieben.

Die Probe-Entnahme aus der Probe-Entnahmestelle 2 erfolgt - wie bereits gesagt - über die Rohrleitung 4. Mittels der Drehkolbenpumpe 7 wird das fluide Medium 3 aus der Probe-Entnahmestelle 2 angesaugt, und eine vordefinierte Menge wird über die Drehkolbenpumpe 7 in einen der Aufnahmebehälter 5 befördert. Die Ablaufsteuerung 9 steuert z.B. den Zeitpunkt der Probe-Entnahme, die Drehung der Drehkolbenpumpe 7 und die korrekte Positionierung des Verteilerrohres 6 relativ zu den Aufnahmebehältern 5. Üblicherweise ist die Ablaufsteuerung 9 bzw. der Elektronikteil von dem 'Nassteil', also den Komponenten, die mit dem fluiden Medium 3 in Kontakt kommen, räumlich abgetrennt. Bevorzugt befindet sich der Elektronikteil, wie in Fig. 1 zu sehen ist, im oberen Teil des Gehäuses 10 des Probenehmers 1.

Um sicherzustellen, dass jeweils die definierte Probenmenge in einen Aufnahmebehälter 5 eingeleitet wird, ist an der Drehkolbenpumpe 7 ein Winkel- oder ein Drehgeber 8 vorgesehen, der die Rotation der Kolben aufnimmt. Die Anzahl der Umdrehungen der Kolben der Drehkvlbenpumpe 7 bzw. die Winkeldrehung der Kolben der Drehkolbenpumpe 7 ist proportional zum Volumenstrom des fluiden Mediums 3 durch die Rohrleitung 4. Zusätzlich oder altemativ kann der Durchfluss des fluiden Mediums 3 durch die Rohrleitung 4 über ein Durchflussmessgerät 11, z.B. über einen Differenzdrucksensor, bestimmt werden. Die Messdaten des Durchflussmessgeräts 11 werden über eine Verbindungsleitung an die Ablaufsteuerung 9 weitergeleitet und dort von einem Mikroprozessor ausgewertet.

### Bezugszeichenliste

- 1: Probenehmer
- 2: Probe-Entnahmestelle
- 3: Fluides Medium
- 4: Rohrleitung
- 5: Aufnahmebehälter
- 6: Verteilerrohr / Verteilersystem
- 7: Drehkolbenpumpe
- 8: Winkel-/Drehgeber
- 9: Ablaufsteuerung
- 10: Gehäuse des Probenehmers
- 11: Durchflusssensor / Durchflußdetektor

## Patentansprüche

1. Probenehmer (1) zur Entnahme einer definierten Probemenge eines fluiden Mediums (3) aus einer Probe-Entnahmestelle (2) mit einer Rohrleitung (4), die mit dem fluiden Medium (3) in der Probe-Entnahmestelle (2) in Kontakt bringbar ist und über die das fluide Medium (3) in zumindest einen Aufnahmebehälter (5) beförderbar ist, mit einer Pumpe, die das Medium (3) über die Rohrleitung (4) aus der Probe-Entnahmestelle (2) in den Aufnahmebehälter (5) befördert, und mit einer Ablaufsteuerung (9), die die Pumpe so ansteuert, dass sie die definierte Probenmenge in den Aufnahmebehälter (5) abfüllt,
**dadurch gekennzeichnet,**
**dass** es sich bei der Pumpe um eine Drehkolbenpumpe (7) handelt.

2. Probenehmer nach Anspruch 1,
**dadurch gekennzeichnet,**
**dass** der Probenehmer (1) als mobile Einheit oder als stationäre Einheit ausgebildet ist.

3. Probenehmer nach Anspruch 1 oder 2,
**dadurch gekennzeichnet,**
**dass** ein Sensor (11; 8) vorgesehen ist, mit dem die durch die Rohrleitung (4) geförderte und/oder in den Aufnahmebehälter (5) abgefüllte Probemenge bestimmt wird.

4. Probenehmer nach Anspruch 3,
**dadurch gekennzeichnet,**
**dass** es sich bei dem Sensor (11; 8) um einen Winkelgeber (8) bzw. einen Drehgeber handelt, der die Winkeldrehung und/oder die Drehbewegung der Drehkolbenpumpe (7) erfasst, und
**dass** die Ablaufsteuerung (9) anhand der von dem Winkelgeber (8) bzw. von dem Drehgeber gelieferten Messwerte die Drehkolbenpumpe (7) so steuert, dass die definierte Probemenge durch die Rohrleitung (4) in den Aufnahmebehälter (5) gefördert wird.

5. Probenehmer nach Anspruch 3 oder 4,
**dadurch gekennzeichnet,**
**dass** es sich bei dem Sensor (11; 8) um ein Durchflussmessgerät (11) handelt, das den Volumenfluß des flüssigen Mediums (3) durch die Rohrleitung (4) bestimmt.

6. Probenehmer nach Anspruch 5,
**dadurch gekennzeichnet,**
**dass** es sich bei dem Durchflussmessgerät (11) um einen Drucksensor handelt.

7. Probenehmer nach Anspruch 3, 4 oder 5,
**dadurch gekennzeichnet,**
**dass** es sich bei dem (11: 8) Sensor um einen Detektor zur Erkennung des Durchflusses des flüssigen Mediums (3) durch die Rohrleitung (4) handelt.

8. Probenehmer nach einem oder mehreren der vorhergehenden Ansprüche,
**dadurch gekennzeichnet,**
**dass** eine Timerfunktion vorgesehen ist, die die Probenahme zu vorgegebenen Zeitpunkten startet.
